# EUROPÄISCHE PATENTANMELDUNG

(11) **EP 2 921 082 A1**
(43) Veröffentlichungstag der Anmeldung: **23.09.2015**
(21) Anmeldenummer: 15155584.4
(22) Anmeldetag: 18.02.2015
(51) Int. Cl.: A47C 13/00, F16B 12/42, F16B 12/60

(54) **Sitzmöbel und/oder Liegemöbel mit einem Chassis und einem damit verbundenen Seitenteil**

(30) Priorität: 14.03.2014 DE 102014103537
(71) Anmelder: Ferdinand Lusch GmbH & Co. KG, 33649 Bielefeld (DE)
(72) Erfinder:
(74) Vertreter: Cohausz & Florack

(57) **Zusammenfassung**

Dargestellt und beschrieben ist ein Sitzmöbel (1) und/oder Liegemöbel, mit wenigstens einem Chassis (6,6',6") und wenigstens einem über wenigstens zwei separate Verbindungen (15,16,16',16") ortsfest mit dem Chassis (6,6',6") verbundenen Seitenteil (5,5',5"). Um den Fertigungsaufwand weiter senken zu können, ohne nennenswerte konstruktive Nachteile in Kauf nehmen zu müssen, ist vorgesehen, dass die erste Verbindung (15) zwischen dem Seitenteil (5,5',5") und dem Chassis (6,6',6") eine formschlüssige Schwenkverbindung ist, dass das Seitenteil (5,5',5") bei gefügter erster Verbindung (15) gegenüber dem Chassis (6,6',6") aus einer Ausgangsstellung in eine Arretierstellung zur Verbindung der zweiten Verbindung (16,16',16") schwenkbar ist und dass die zweite Verbindung (16,16',16") zwischen dem Chassis (6,6',6") und dem Seitenteil (5,5'5,") ein Zurückschwenken des Seitenteils (5,5',5") aus der Arretierstellung in die Ausgangsstellung blockiert.

## Beschreibung

Die Erfindung betrifft ein Sitzmöbel und/oder Liegemöbel, mit wenigstens einem Chassis und wenigstens einem über wenigstens zwei separate Verbindungen ortsfest mit dem Chassis verbundenen Seitenteil.

Sitzmöbel und Liegemöbel weisen in vielen Fällen zwei Seitenteile auf, zwischen denen eine Sitzfläche oder eine Liegefläche vorgesehen ist. Die Seitenteile bilden dabei in der Regel den seitlichen Abschluss der Sitzmöbel oder Liegemöbel. Zudem wird das Sitzmöbel und/oder das Liegemöbel oftmals von den Seitenteilen getragen, über die die Gewichtskräfte auf den Boden abgeleitet werden, etwa wenn kein zentraler Fuß oder dergleichen für das Aufstellen des Sitzmöbels und/oder Liegemöbels vorgesehen ist.

Zwischen den Seitenteilen befindet sich eine Baugruppe, die als Chassis bezeichnet werden kann und sowohl zur Aussteifung als auch zur Stützung wenigstens der Sitzfläche bzw. der Liegefläche dient. Es kann vorgesehen sein, dass alle Bauteile des Möbels mit Ausnahme der Seitenteile von dem Chassis getragen werden, also beispielsweise auch eine Rückenlehne, ein Fußteil, wenigstens eine Armlehne und/oder wenigstens ein Funktionsbeschlag etwa zum Verstellen einer Rückenlehne, eines Sitzes, eines Fußteils und/oder wenigstens einer Armlehne. Bedarfsweise können auch die Seitenteile vom Chassis getragen werden, etwa wenn diese nicht selbst auf dem Untergrund stehen.

Das Chassis weist typischerweise an gegenüberliegenden Seiten jeweils eine Anschlussplatte mit Öffnungen auf, über welche das Chassis an jeweils einem Seitenteil verschraubt wird. Somit wird eine feste und dauerhafte Verbindung und zudem bedarfsweise eine Art Gestell geschaffen, das für eine hohe Stabilität und Festigkeit des Sitzmöbels und/oder Liegemöbels sorgt. An diesem Gestell bzw. an dem Chassis können dann die für das jeweilige Sitzmöbel oder Liegemöbel erwünschten Baugruppen befestigt werden. Ein entsprechendes Sitzmöbel, bei dem das Chassis in Querrichtung modular erweiterbar ist, um ein mehrsitziges Sitzmöbel bereitzustellen, ist in der DE 203 19 481 U1 beschrieben.

Nachteilig an derartigen Sitzmöbeln ist der hohe Aufwand bei der Verbindung der Seitenteile mit dem Chassis zu einem stabilen und dauerhaften Gestell des Sitzmöbels und/oder Liegemöbels. Die Fertigung durch mehrere Monteure gleichzeitig führt ebenso zu höheren Fertigungskosten wie die Zuhilfenahme von speziellen Hilfsmitteln oder die Fertigung mit entsprechend längeren Taktzeiten. Bedarfsweise ist die Fertigung auch nur durch entsprechend geschultes Personal möglich, damit die gewünschte Stabilität und Langlebigkeit des Gestells gewährleistet werden kann.

Der vorliegenden Erfindung liegt daher die Aufgabe zugrunde, das eingangs genannte und zuvor näher beschriebene Sitzmöbel und/oder Liegemöbel derart auszugestalten und weiterzubilden, dass der Fertigungsaufwand weiter gesenkt werden kann, ohne nennenswerte konstruktive Nachteile in Kauf nehmen zu müssen.

Diese Aufgabe ist bei einem Sitzmöbel und/oder Liegemöbel nach dem Oberbegriff von Anspruch 1 dadurch gelöst, dass die erste Verbindung zwischen dem Seitenteil und dem Chassis eine formschlüssige Schwenkverbindung ist, dass das Seitenteil bei gefügter erster Verbindung gegenüber dem Chassis aus einer Ausgangsstellung in eine Arretierstellung zur Verbindung der zweiten Verbindung schwenkbar ist und dass die zweite Verbindung zwischen dem Chassis und dem Seitenteil ein Zurückschwenken des Seitenteils aus der Arretierstellung in die Ausgangsstellung blockiert.

Erfindungsgemäß sind folglich wenigstens zwei unterschiedliche Verbindungen vorgesehen, um das wenigstens eine Seitenteil mit dem Chassis beispielsweise zu einem Gestell des Sitzmöbels und/oder Liegemöbels zu verbinden. Die beiden Verbindungen können als erste Verbindung und als zweite Verbindung bezeichnet werden, wobei die erste Verbindung vor der zweiten Verbindung gefügt wird. Erst durch die erste Verbindung und die zweite Verbindung jeweils zwischen dem Chassis und dem wenigstens einen Seitenteil wird eine feste Anbindung des Chassis an das Seitenteil und umgekehrt bereitgestellt.

Bei der ersten Verbindung handelt es sich um eine Schwenkverbindung. Bei gefügter ersten Verbindung kann diese verschwenkt werden, ohne die erste Verbindung dabei zu trennen. Dies ermöglicht ein gezieltes Verschwenken, wobei das Chassis und das Seitenteil entsprechend zueinander ausgerichtet sind. Diese Ausrichtung wird durch einen Formschluss der ersten Verbindung erreicht, der der Positionierung des Chassis gegenüber dem Seitenteil und umgekehrt dient. Der Formschluss behindert jedoch nicht oder nicht maßgeblich das Verschwenken des Seitenteils gegenüber dem Chassis.

Die erste Verbindung kann als gefügt angesehen werden, bevor das Seitenteil in die Arretierstellung zum Fügen der zweiten Verbindung geschwenkt worden ist. In der Arretierstellung von Chassis und Seitenteil kann die erste Verbindung jedoch abschließend gefügt sein. Die erste Verbindung ist also bereits als gefügt anzusehen, wenn das Seitenteil um die erste Verbindung und somit entsprechend geführt in die Arretierstellung relativ zum Chassis geschwenkt werden kann. Dies kann bedeuten, dass der Formschluss der ersten Verbindung während des Verschwenkens des Seitenteils in die Arretierstellung, insbesondere in der Ausgangsstellung, ein Spiel aufweist. Das Seitenteil kann also bedarfsweise verhältnismäßig locker am Chassis festgelegt sein und/oder umgekehrt. Ein geringes Spiel ist dann nicht unbedingt schädlich und kann das weitere Verbinden von Chassis und Seitenteil sogar begünstigen. Allerdings kann weiter vorzugsweise in der abschließend gefügten Stellung der ersten Verbindung, also etwa in der Arretierstellung des Seitenteils gegenüber dem Chassis, ein spielfreier Formschluss der ersten Verbindung zwischen dem Chassis und dem Seitenteil vorgesehen sein. Dann kann die Spielfreiheit genutzt werden, um einen festen Sitz des Seitenteils relativ zum Chassis bereitzustellen. Da in der Arretierstellung ein weiteres Verschwenken der ersten Verbindung nicht mehr erforderlich ist, kann ein etwaiger Nachteil des spielfreien Formschlusses auf die Verschwenkbarkeit der ersten Verbindung in Kauf genommen werden.

Die entsprechende Schwenkbewegung dient letztlich dem einfachen und schnellen Herstellen der zweiten Verbindung. Dabei kann das Seitenteil von einer Ausgangsstellung relativ zum Chassis gegenüber dem Chassis in eine Arretierstellung verschwenkt werden, in der die zweite Verbindung gefügt werden kann. Die erste Verbindung muss dabei jedoch keine Zwangsführung für das Verschwenken des Seitenteils gegenüber dem Chassis bereitstellen. Denkbar und bedarfsweise bevorzugt ist dies jedoch.

Nach dem Fügen der zweiten Verbindung zwischen dem Chassis und dem wenigstens einen Seitenteil in der Arretierstellung des Seitenteils relativ zum Chassis blockiert die zweite Verbindung ein Zurückverschwenken des Seitenteils gegenüber dem Chassis in die Ausgangsstellung und somit ein Trennen von Chassis und Seitenteil. Zudem wirken die erste Verbindung und die zweite Verbindung im gemeinsam gefügten Zustand vorzugsweise derart zusammen, dass das Seitenteil und das Chassis fest miteinander verbunden sind. Dabei kommt insbesondere eine ortsfeste Verbindung zwischen dem Chassis und dem wenigstens einen Seitenteil in Frage. Ein gewisses Spiel zwischen dem Chassis und dem Seitenteil kann dabei zulässig sein, ist jedoch grundsätzlich weniger bevorzugt. Bedarfsweise kann die ortsfeste Verbindung zwischen dem Chassis nur in bestimmten Raumrichtungen gegeben sein, um wenigstens oder lediglich ausgesuchte Kräfte zuverlässig vom Chassis auf das Seitenteil ableiten zu können.

Bei Sitzmöbeln und/oder Liegemöbeln der genannten Art wird das Chassis regelmäßig nicht nur mit einem Seitenteil, sondern mit zwei Seitenteilen verbunden sein, und zwar vorzugsweise an zwei gegenüberliegenden Seiten des Chassis. Dabei bietet es sich an, wenn jedes der beiden Seitenteile wie zuvor beschrieben über zwei separate Verbindungen, nämlich die erste Verbindung und die zweite Verbindung, am Chassis montiert sind. Dabei sind die Verbindungen zwischen dem Chassis und den Seitenteilen vorzugsweise jeweils spiegelbildlich zueinander ausgebildet. Alternativ oder zusätzlich werden die Seitenteile auch in entgegengesetzte Richtungen aus der jeweiligen Ausgangsstellung in die jeweilige Arretierstellung verschwenkt.

Durch die Verbindung des Chassis mit zwei Seitenteilen wird zudem vorzugsweise ein Gestell des Sitzmöbels gebildet, das ähnlich einer tragenden Rahmenstruktur der Stabilisierung und Aussteifung des Sitzmöbels dient. Zudem nimmt das entsprechende Gestell die Gewichtskräfte des wenigstens einen Benutzers und die Gewichtskräfte weiterer Anbauteile, wie Rückenlehne und/oder Fußteil, auf, um die Kräfte an den Untergrund abzuleiten, auf dem das Sitzmöbel und/oder das Liegemöbel steht.

Bei einer ersten bevorzugten Ausgestaltung des Sitzmöbels und/oder Liegemöbels ist die erste Verbindung als Steckverbindung ausgebildet. Auf diese Weise lässt sich die erste Verbindung einfach und schnell fügen, und zwar insbesondere von einem einzigen Monteur. Dabei kann im eingesteckten Zustand der ersten Verbindung das Seitenteil teilweise in das Chassis eingreifen und/oder umgekehrt. Dadurch kann die erste Verbindung in konstruktiv einfacher Weise bereitgestellt werden. Zur besseren Positionierung des Seitenteils gegenüber dem Chassis kann in der Einsteckrichtung zum Fügen der Steckverbindung ein Endanschlag vorgesehen sein. Dieser Endanschlag kann die Endstellung beim Einstecken des Seitenteils in das Chassis und/oder umgekehrt definieren. Alternativ oder zusätzlich kann die Einsteckrichtung vorzugsweise im Wesentlichen in Längsrichtung des Sitzmöbels und/oder im Wesentlichen horizontal verlaufen, was das Fügen der ersten Verbindung vereinfacht.

Um eine geeignete Positionierung zwischen dem Chassis und dem Seitenteil festzulegen, und zwar im verbundenen Zustand zwischen dem Chassis und dem Seitenteil und/oder für das gezielte Verschwenken des Seitenteils relativ zum Chassis aus der Ausgangsstellung in die Arretierstellung, kann die erste Verbindung einen Formschluss in wenigstens einem Paar gegenläufiger Richtungen aufweisen. Eine Verschiebung der ersten Verbindung entlang der entsprechenden Achse ist also nicht oder nur bis zum jeweiligen Anschlag der formschlüssigen Verbindung möglich. Dabei ist es aus den genannten Gründen grundsätzlich weiter bevorzugt, wenn kein oder nur ein geringes Spiel der ersten Verbindung entlang dieser Achse besteht. Umso genauer ist in dieser Beziehung die Positionierung von Seitenteil und Chassis zueinander.

Dabei ist es grundsätzlich weiter bevorzugt, wenn in zwei Paaren gegenläufiger Richtungen ein entsprechender Formschluss gebildet wird. Die zuvor genannten Vorteile gelten dann entlang der beiden entsprechenden Achsen, was zu einer noch besseren Positionierung und Verbindung zwischen dem Seitenteil und dem Chassis führt. Dabei ist es besonders günstig, wenn die beiden Paare gegenläufiger Richtungen senkrecht zueinander verlaufen. Dann werden die genannten Vorteile in einer Ebene erzielt, die vorzugsweise im Wesentlichen vertikal bzw. senkrecht zum Untergrund verläuft, sofern der Untergrund eben und horizontal ist. Dabei kann ein Paar gegenläufiger Richtungen vertikal und das andere Paar gegenläufiger Richtungen in Längsrichtung des Sitzmöbels, also beispielsweise parallel zum Seitenteil verlaufen. Zudem ist der beschriebene Formschluss insbesondere in der Arretierstellung des Seitenteils bevorzugt, da dann eine besonders stabile Verbindung zwischen Seitenteil und Chassis gewünscht ist. Daher bietet es sich grundsätzlich weiter an, wenn die erste Verbindung in der Arretierstellung in wenigstens einem der Paare gegenläufiger Richtungen einen im Wesentlichen spielfreien Formschluss bildet.

Zum sicheren und einfachen Fügen der ersten Verbindung kann das Chassis ein Hohlprofil aufweisen, in das das Seitenteil teilweise eingesteckt wird und/oder umgekehrt. Dabei bietet es sich zur konstruktiven Vereinfachung des Chassis an, wenn das Hohlprofil in Form einer sich zwischen den Seitenteilen erstreckenden Traverse ausgebildet ist. Dabei bieten es sich an, wenn das Hohlprofil rohrförmig oder kanalförmig bzw. mit einem runden, ovalen oder mehreckigen Querschnitt ausgebildet ist. Derartige Hohlprofile stellen eine hohe Steifigkeit des Chassis bereit. Im Übrigen kann sich die Traverse im Wesentlichen zwischen zwei Seitenteilen an gegenüberliegenden Seiten des Chassis erstrecken. Zur Anbindung der Traverse an das wenigstens eine Seitenteil kann das Chassis eine entsprechend ausgebildete Anschlussplatte aufweisen.

Aus konstruktiver Sicht ist es grundsätzlich bevorzugt, wenn das Chassis, das Hohlprofil, die Traverse und/oder die wenigstens eine Anschlussplatte eine seitliche Öffnung aufweist, um das Fügen der ersten Verbindung zu vereinfachen.

Zum einfachen Fügen der ersten Verbindung sowie zum Aufnehmen der entsprechenden Kräfte im gefügten Zustand kann das Seitenteil einen Vorsprung zum Einstecken in das Chassis bzw. das Hohlprofil aufweisen. Zur Stabilisierung der ersten Verbindung kann der Vorsprung vorzugsweise über eine Anschlussplatte am Seitenteil gehalten sein. Zweckmäßig ist es dabei, wenn die Anschlussplatte mit dem übrigen Seitenteil fest verschraubt ist. Dies kann im Sinne einer Vorkonfektionierung des Seitenteils erfolgen, so dass der Fertigungsaufwand für das Sitzmöbel und/oder das Liegemöbel als solches nicht oder nur unwesentlich gesteigert wird. Der Vorsprung kann zum leichteren Fügen der ersten Verbindung bedarfsweise in Form eines Fingers ausgestaltet sein, der selbst hakenförmig ausgebildet sein kann. Dies kann bedarfsweise einfach und funktional dadurch erreicht werden, dass sich der Finger abschnittsweise vom Seitenteil weg in Richtung des Chassis und, vorzugsweise an einem Ende, in Richtung des Untergrunds erstreckt.

Alternativ oder zusätzlich, kann der Vorsprung in einer gefügten Stellung der ersten Verbindung zwischen dem Chassis und dem Seitenteil, vorzugsweise im Wesentlichen vollständig, im Chassis und/oder dem Hohlprofil aufgenommen sein. Der Vorsprung ist dann gegenüber äußeren Einwirkungen gut geschützt. Außerdem kann er so nicht versehentlich außer Eingriff mit dem Chassis gelangen. Alternativ oder zusätzlich kann auf diese Weise auch erreicht werden, dass sich der Vorsprung in der gefügten Stellung mehrfach am Chassis abstützt. Die entsprechenden Anschlagflächen können in der Arretierstellung zu einer Stabilisierung der Verbindung und/oder in der Ausgangsstellung zu einer Positionierung und Führung von Chassis und Seitenteil zum Verschwenken in die Arretierstellung beitragen.

Um das Seitenteil gegenüber dem Chassis problemlos und zuverlässig in die Arretierstellung schwenken zu können und umgekehrt, kann die erste Verbindung drehbar zu einer parallel zur Querrichtung das Seitenteils verlaufenden Achse ausgebildet sein. Diese Drehbarkeit kann wenigstens in der Ausgangsstellung des Seitenteils bezogen auf das Chassis und/oder im eingesteckten Zustand der ersten Verbindung gegeben sein. In der Arretierstellung kann die Drehbarkeit aber vorzugsweise durch einen Formschluss der zweiten Verbindung blockiert sein, um ein dauerhaft stabiles Sitzmöbel zu erhalten.

Alternativ oder zusätzlich bietet sich zur einfachen und dauerhaften Verbindung von Chassis und Seitenteil eine dritte Verbindung zwischen dem Chassis und dem Seitenteil an. Diese dritte Verbindung ist dabei weiter vorzugsweise in der Arretierstellung des Seitenteils gegenüber dem Chassis zu fügen, um das Verschwenken des Seitenteils gegenüber dem Chassis von der Ausgangsstellung in die Arretierstellung nicht zu behindern.

Dabei ist die dritte Verbindung zwischen dem Chassis und dem Seitenteil dann besonders effektiv, wenn die dritte Verbindung in wenigstens einem Paar gegenläufiger Richtungen einen Formschluss bildet. Noch günstiger ist es jedoch, wenn die dritte Verbindung in zwei Paaren, insbesondere senkrecht zueinander verlaufender, gegenläufiger Richtungen jeweils einen Formschluss bilden.

Zum einfachen und zuverlässigen Fügen der dritten Verbindung hat es sich als zweckmäßig erwiesen, wenn der Vorsprung des Seitenteils in Form eines hakenförmigen Fingers ausgebildet ist, der sich abschnittsweise vom Seitenteil in Richtung des Chassis und an einem, vorzugsweise freien, Ende in Richtung des Untergrunds erstrecken kann. Im gefügten Zustand der dritten Verbindung kann dann das Ende des Fingers formschlüssig in eine Aufnahme, insbesondere Öffnung, des Chassis eingreifen. Erst dann wird für den Monteur erkennbar die Arretierstellung erreicht, in der auch die zweite Verbindung gefügt ist oder gefügt werden kann. Der Fachmann kann also bedarfsweise durch die zweite Verbindung und die dritte Verbindung ein Feedback über das Erreichen der Arretierstellung erhalten und zudem eine zuverlässigere und sichere Verbindung zwischen dem Chassis und dem Seitenteil erreichen.

Um eine dauerhafte stabile aber einfache Montage des Sitzmöbels und/oder des Liegemöbels gewährleisten zu können, kann die zweite Verbindung zwischen dem Chassis und dem Seitenteil einen das Zurückschwenken des Seitenteils aus der Arretierstellung in die Ausgangsstellung blockierenden Formschluss bilden. Dabei kann die zweite Verbindung als Rastverbindung zwischen dem Chassis und dem Seitenteil ausgebildet sein. So kann durch ein Schwenken des Seitenteils in die Arretierstellung ein zwangsweises Fügen der zweiten Verbindung zwischen dem Chassis und dem Seitenteil erreicht werden, das dem Monteur das erfolgte Fügen zudem akustisch mitteilen kann. Dies kann jedoch zu einem höheren konstruktiven Aufwand für die Bereitstellung der zweiten Verbindung zwischen dem Chassis und dem Seitenteil führen. Daher kann auch ein Formschluss ohne einhergehende Verrastung mit oder ohne hörbarem akustischen Signal zwischen dem Chassis und dem Seitenteil infrage kommen.

Eine konstruktiv einfach und leicht zu fertigende zweite Verbindung kann grundsätzlich dadurch erhalten werden, dass wenigsten ein Bolzenelement vorgesehen ist, das eine Öffnung des Chassis und/oder des Seitenteils durchdringt, um einen Formschluss zwischen dem Chassis und dem Seitenteil in der zweiten Verbindung zu bilden. Dabei kann die Stabilität der Verbindung verbessert werden, ohne den Montageaufwand zu erhöhen, wenn wenigstens zwei jeweils eine Öffnung des Chassis und/oder des Seitenteils durchdringende Bolzenelemente vorgesehen sind. Das wenigstens eine Bolzenelement kann dabei einfach und schnell auf wenigstens einer Seite der Öffnung gegen Herausziehen gesichert werden. Diese Sicherung ist dabei vorzugsweise formschlüssig, insbesondere rein formschlüssig. Für die entsprechende Sicherung des wenigstens einen Bolzenelements kommen an sich bekannte Mittel infrage wie beispielsweise Splinte oder dergleichen. Es ist natürlich auch denkbar, das wenigstens eine Bolzenelement in Form eines Schraubenelements auszubilden und dieses durch Aufschrauben einer Mutter auf das Gewinde des Schraubenelements und/oder durch Einschrauben von Schrauben in das Gewinde des Bolzenelements zu sichern. Dies ist jedoch konstruktiv und fertigungstechnisch aufwendiger und daher eher weniger bevorzugt.

Für eine dauerhafte und stabile Montage des wenigstens einen Seitenteils am Chassis ist es besonders günstig, wenn die erste Verbindung, die zweite Verbindung und/oder die dritte Verbindung zwischen dem Chassis und dem Seitenteil jeweils in wenigstens zwei senkrecht zueinander verlaufenden Paaren gegenläufiger Richtungen einen Formschluss bilden. Für eine ortsfeste und komfortable Verbindung bietet es sich weiter an, wenn die Verbindungen zusammen in drei senkrecht zueinander verlaufenden Paaren gegenläufiger Richtungen einen Formschluss bilden. Um ein Wackeln oder Klappern der gemeinsamen Verbindung zwischen dem Chassis und dem Seitenteil zu vermeiden, kommt in jeden einzelnen Fall bedarfsweise ein im Wesentlichen spielfreier Formschluss infrage.

Um eine möglichst hohe Steifigkeit und Langlebigkeit des Sitzmöbels und/oder Liegemöbels zu gewährleisten, kann das Chassis, die Anschlussplatte des Chassis, das Hohlprofil, die Traverse, der Vorsprung und/oder die Anschlussplatte zum Anbinden des Vorsprungs an das Seitenteil aus wenigstens einem metallischen Werkstoff gefertigt sein. Aus Kostengesichtspunkten bietet sich dabei insbesondere Stahl an. Alternativ oder zusätzlich kann wenigstens der Grundkörper des wenigstens einen Seitenteils aus einem Holzwerkstoff gebildet sein. Auf diese Weise wird eine ausreichende Stabilität bei geringem Gewicht des Sitzmöbels und/oder Liegemöbels erreicht.

Nachfolgend wird die Erfindung anhand einer lediglich Ausführungsbeispiele darstellenden Zeichnung näher erläutert. In der Zeichnung zeigt
- Fig. 1: ein erfindungsgemäßes Sitzmöbel mit einem nicht montierten Seitenteil in einer perspektivischen Ansicht,
- Fig. 2: das Chassis und ein daran montiertes Seitenteil des Sitzmöbels aus Fig. 1 in einer perspektivischen Ansicht,
- Fig. 3: das Chassis und das Seitenteil aus Fig. 2 während des Verbindens in einer perspektivischen Schnittansicht,
- Fig. 4: das Chassis und das Seitenteil aus Fig. 2 in der gegenseitigen Arretierstellung in einer perspektivischen Schnittansicht,
- Fig. 5A-B: die erste und die dritte Verbindung zwischen dem Chassis und dem Seitenteil aus Fig. 2 in einer vertikalen Schnittansicht und einer Ansicht von unten und
- Fig. 6A-B: alternative Ausgestaltungen der zweiten Verbindung zwischen einem Chassis und einem Seitenteil eines erfindungsgemäßen Sitzmöbels in einer perspektivischen Ansicht.

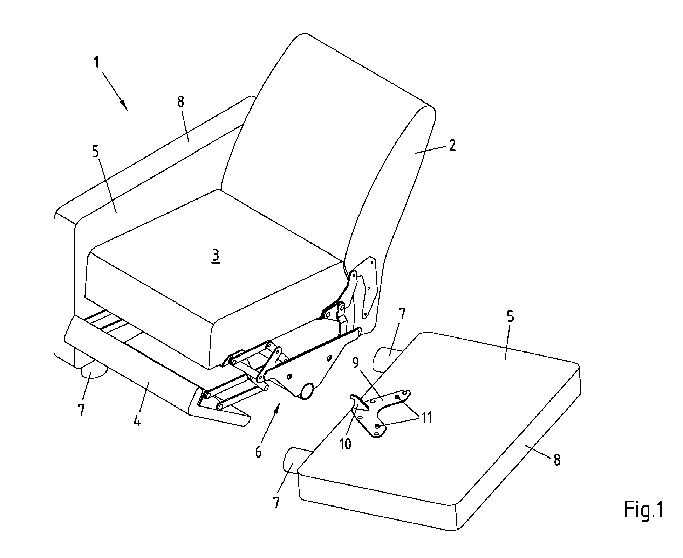

In der Fig. 1 ist ein Sitzmöbel 1 in Form eines Sessels dargestellt. Alternativ könnte es sich aber auch um ein Sofa oder ein Liegemöbel, etwa in Form einer Liege oder dergleichen, handeln. Das Sitzmöbel 1 umfasst eine Rückenlehne 2 einen Sitz 3, ein verstellbares Fußteil 4 und zwei Seitenteile 5 an den gegenüberliegenden Enden des Sitzmöbels 1. Die beiden Seitenteile 5 sind über ein Chassis 6 miteinander verbunden, das die Rückenlehne 2, den Sitz 3 und das Fußteil 4 trägt. Die Rückenlehne 2, der Sitz 3 und das Fußteil 4 sind dazu über wenigstens einen Schwenkbeschlag und/oder Funktionsbeschlag am Chassis 6 festgelegt. Der besseren Übersichtlichkeit halber ist eines der beiden Seitenteile 5 im unverbundenen Zustand dargestellt.

Durch die Verbindung zwischen den Seitenteilen 5 und dem Chassis 6 wird eine Art Gestell oder Rahmenstruktur für das Sitzmöbel 1 gebildet, das der Aussteifung des Sitzmöbels 1 dient. Alternativ könnte das Chassis mit wenigstens einem Fuß versehen sein und können sich die Anbauteile des Sitzmöbels, wie die Rückenlehne, der Sitz, das Fußteil und die Seitenteile, über das Chassis gegenüber dem Untergrund abstützen.

Die dargestellten und insoweit bevorzugten Seitenteile 5 weisen zwei Füße 7 auf, mit denen die Seitenteile 5 auf dem Untergrund aufstehen. Zudem sind die Oberseiten der Seitenteile 5 als Armlehnen 8 ausgebildet. Es könnten aber auch separate Armlehnen vorgesehen sein oder auf Armlehnen ganz verzichtet werden.

Zur Verbindung des Seitenteils 5 mit dem Chassis 6 weist das Seitenteil 5 eine Anschlussplatte 9 auf. An der Anschlussplatte 9 des Seitenteils 5 ist ein Vorsprung 10 in Form eines hakenförmiger Fingers vorgesehen, der sich ausgehend von der Anschlussplatte 9 von dem Seitenteil 5 weg, und zwar in Richtung des gegenüberliegenden Seitenteils 5, erstreckt. In Richtung des freien Endes des Vorsprungs 10 knickt der Finger nach unten ab, so dass das äußere Ende des Vorsprungs 10 sich in Richtung seines freien Endes zum Untergrund des Sitzmöbels 1 erstreckt. Oberhalb des Vorsprungs 10 sind an der Anschlussplatte 9 des dargestellten und insoweit bevorzugten Seitenteils 5 zwei Bolzenelemente 11 vorgesehen, die sich ebenfalls ausgehend von der Anschlussplatte 9 des Seitenteils 5 weg erstrecken, und zwar in Richtung des gegenüberliegenden Seitenteils 5.

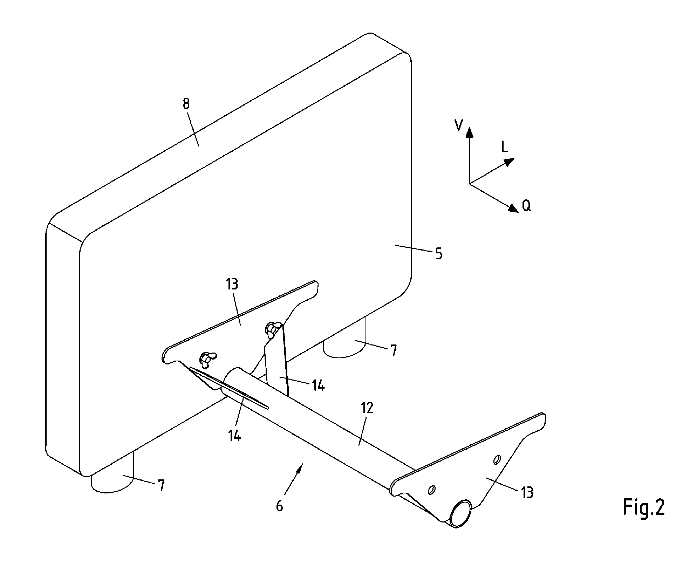

In der Fig. 2 ist das Chassis 6 näher dargestellt. Das dargestellte und insoweit bevorzugte Chassis 6 ist in Form einer Traverse ausgebildet, die sich zwischen den beiden Seitenteilen 5 des Sitzmöbels 1 erstreckt. Dabei ist das Chassis 6 im Wesentlichen als rohrförmiges Hohlprofil 12 mit einem im Wesentlichen kreisförmigen Querschnitt ausgebildet. An den den Seitenteilen 5 zugewandten seitlichen Enden des Hohlprofils 12 weist das Chassis 6 jeweils eine Anschlussplatte 13 auf, die über Verstärkungsstreben 14 mit dem Hohlprofil 12 verbunden sind. Über die Anschlussplatten 13 kann wenigstens teilweise ein Anschluss des Chassis 6 an die Seitenteile 5 erreicht werden. Das Chassis 6 ist beim dargestellten und insoweit bevorzugten Sitzmöbel 1 aus Stahl gefertigt.

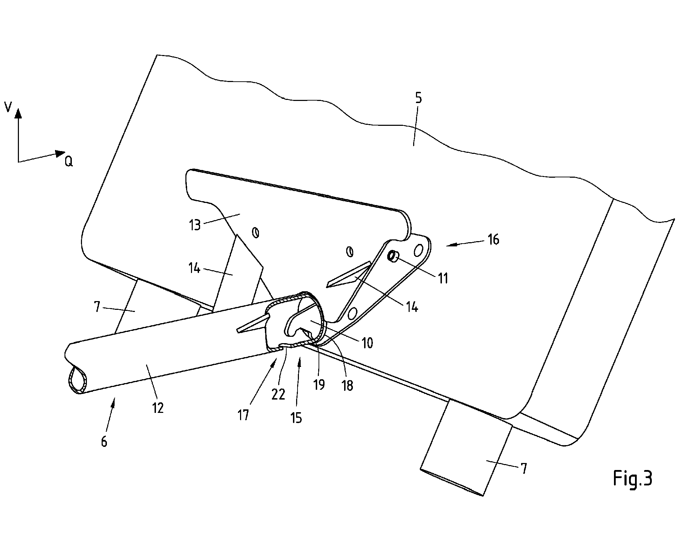

In der Fig. 3 ist das Seitenteil 5 und das Chassis 6 in einer Stellung beim Verbinden miteinander dargestellt. Dabei handelt es sich bedarfsweise um eine Ausgangsstellung. Beim Verbinden des Seitenteils 5 mit dem Chassis 6 wird zunächst eine erste Verbindung 15 gefügt, auch wenn diese noch nicht gleich abschließend gefügt wird. Bei der ersten Verbindung 15 handelt es sich um eine Schwenkverbindung, die ein Verschwenken des Seitenteils 5 gegenüber dem Chassis 6 aus einer Ausgangsstellung in eine Arretierstellung erlaubt, ohne die erste Verbindung 15 lösen zu müssen. In der Arretierstellung können dann zusätzlich eine zweite Verbindung 16 und eine dritte Verbindung 17 zwischen dem Chassis 6 und dem Seitenteil 5 bereitgestellt werden.

Bei der dargestellten ersten Verbindung 15 handelt es sich auch um eine Steckverbindung da die erste Verbindung 15 durch teilweises Einstecken des Seitenteils 5 in das Chassis 6, genauer gesagt durch Einstecken des Vorsprungs 10 des Seitenteils 5 in das Hohlprofil 12 des Chassis 6, gebildet wird. Dabei kann der Vorsprung 10 bis zu einem Endanschlag 18 in das Chassis 6 eingesteckt werden, der durch die Anlage der beiden Anschlussplatten 9,13 aneinander gebildet wird. Der Endanschlag 18 bildet letztlich in der Einsteckrichtung des Vorsprungs 10 in das Hohlprofil 12 des Chassis 6 einen Formschluss. Dieser Formschluss und/oder die Einsteckrichtung kann dabei parallel zum Hohlprofil 12 oder parallel zur Querrichtung Q des Sitzmöbels 1 sein, wobei die Querrichtung Q des Sitzmöbels 1 die beiden Seitenteile 5 in der Arretierstellung im Wesentlichen senkrecht schneiden kann.

Das Einstecken des Seitenteils 5 in das Chassis 6 erfolgt beim dargestellten und insoweit bevorzugten Sitzmöbel 1 mit an der Oberseite leicht nach außen geneigtem Seitenteil 5. Die Stellung des Seitenteils 5 kann eine Ausgangsstellung bilden, aus der das Seitenteil 5 in die Arretierstellung zum Verbinden weiterer Verbindungen und zum abschließenden Fügen der ersten Verbindung 15 geschwenkt wird. Im eingesteckten Zustand der ersten Verbindung 15 steht der Vorsprung 10 der Seitenwand 5 mit einer unteren Anschlagfläche 19 auf dem Hohlprofil 12 des Chassis 6 auf. Die untere Anschlagfläche 19 und das Hohlprofil 12 bilden folglich einen Formschluss in vertikaler Richtung V nach unten. Neben der Schwenkbarkeit des Seitenteils 5 im eingesteckten Zustand der ersten Verbindung 15 ermöglicht die erste Verbindung 15 im eingesteckten Zustand auch eine Drehbarkeit des Seitenteils 5 um das Chassis 6. Dabei kann die Drehachse des Seitenteils 5 parallel zum Hohlprofil 12 und/oder parallel zur Querrichtung Q des Sitzmöbels 1 ausgerichtet sein. Das Seitenteil 5 kann also während oder nach dem Aufschwenken von der Ausgangsstellung in die Arretierstellung leicht gedreht werden, um ein einfaches Fügen der zweiten Verbindung 16 und der dritten Verbindung 17 zu ermöglichen.

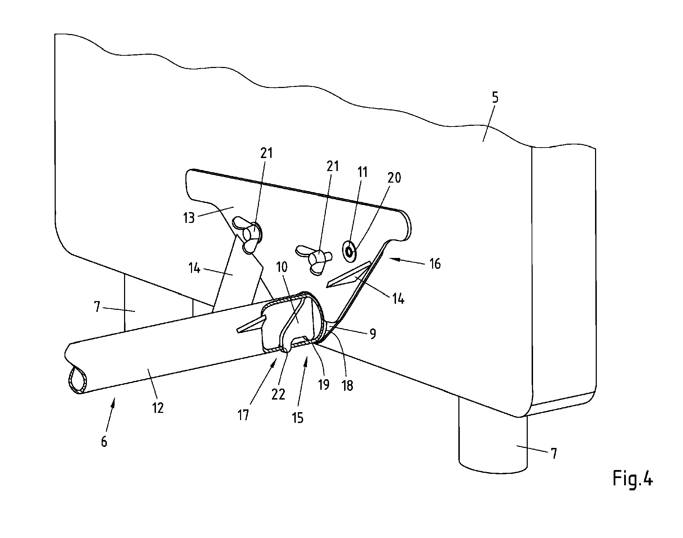

In der Fig. 4 ist das Seitenteil 5 relativ zum Chassis 6 in der Arretierstellung dargestellt. Zudem ist die zweite Verbindung 16 teilweise gefügt. Die dritte Verbindung 17 ist dagegen abschließend gefügt. Die zweite Verbindung 16 weist beim dargestellten und insoweit bevorzugten Sitzmöbel 1 zwei Bolzenelemente 11 auf, die in der Arretierstellung durch Öffnungen 20 in der Anschlussplatte 13 des Chassis 6 hindurchgreifen. Die Bolzenelemente 11 weisen Innengewinde auf, in die von der Seite des Chassis 6 Schrauben 21, vorliegend in Form von Flügelschrauben, eingedreht werden, um das Seitenteil 5 formschlüssig in der Arretierstellung zu fixieren und ein Zurückschwenken des Seitenteils 5 aus der Arretierstellung in die Ausgangsstellung zu verhindern. Die zweite Verbindung 16 stellt im gefügten Zustand einen Formschluss in drei Paaren jeweils einander gegenläufiger Richtungen bereit, und zwar beispielsweise in vertikaler Richtung V, in Querrichtung Q des Sitzmöbels 1 und in Längsrichtung L des Sitzmöbels 1, also im Wesentlichen parallel zu den Seitenteilen 5.

Die dritte Verbindung 17 wird durch Aufschwenken des Seitenteils 5 in die Arretierstellung und Eingreifen des freien nach unten gerichteten Endes des Vorsprungs 10 in Form eines hakenförmigen Fingers in eine Aufnahme 22 in Form einer Öffnung im Chassis 6 geschlossen. Dabei wird ein Formschluss in zwei Paaren gegenläufiger Richtungen bereitgestellt, und zwar in Querrichtung Q und Längsrichtung L des Sitzmöbels 1 bzw. in einer horizontalen Ebene.

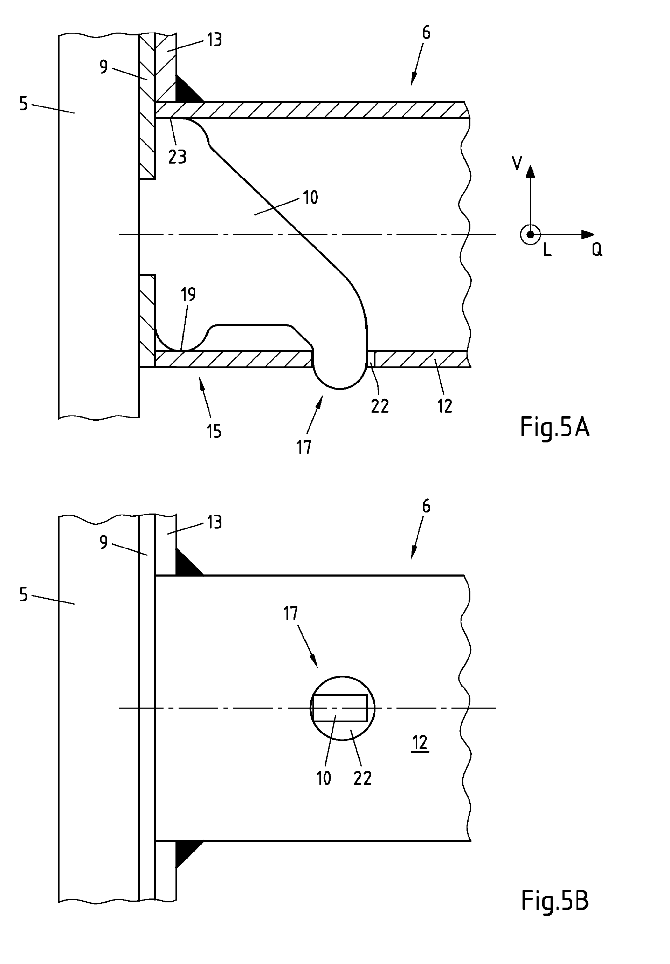

Die erste Verbindung 15 und die dritte Verbindung 17 zwischen dem Chassis 6 und dem Seitenteil 5 sind im Detail in den Fig. 5A-B dargestellt. Die Fig. 5A zeigt eine vertikale Schnittansicht durch das Chassis 6, während die Fig. 5B eine Ansicht von unten zeigt. Der in der Aufnahme 22 des Hohlprofils 12 des Chassis 6 aufgenommene Vorsprung 10 weist eine obere Anschlagfläche 23 und eine untere Anschlagfläche 19 auf, die sich in Anlage oder im Wesentlichen in Anlage mit dem Hohlprofil 12 befinden. Auf diese Weise wird bei horizontalem Untergrund ein vorzugsweise im Wesentlichen spielfreier Formschluss in einer vertikalen Richtung V bereitgestellt. Aufgrund des kreisförmigen Querschnitts des Hohlprofils 12 wird zudem ein Formschluss in Längsrichtung L des Sitzmöbels 1 bereitgestellt, und zwar vorzugsweise senkrecht zum vertikalen Formschluss.

Die dritte Verbindung 17 bildet somit einen Formschluss in einer Ebene parallel zum Untergrund und/oder bedarfsweise in einer Querrichtung Q und einer Längsrichtung L des Sitzmöbels 1. Dies wird durch das Eingreifen des freien Endes des Vorsprungs 10 in Form eines hakenförmigen Fingers in die Öffnung 22 an der Unterseite des Chassis 6, genauer des Hohlprofils 12, erreicht. Dies geschieht bei richtiger Ausrichtung des Seitenteils 5 gegenüber dem Chassis 6 automatisch mit dem Aufschwenken des Seitenteils 5 in die Arretierstellung. Die Formschlüsse der dargestellten und insoweit bevorzugten dritten Verbindung 17 sind dabei nicht im Wesentlichen spielfrei ausgebildet. Dennoch ist das vorhandene Spiel relativ klein.

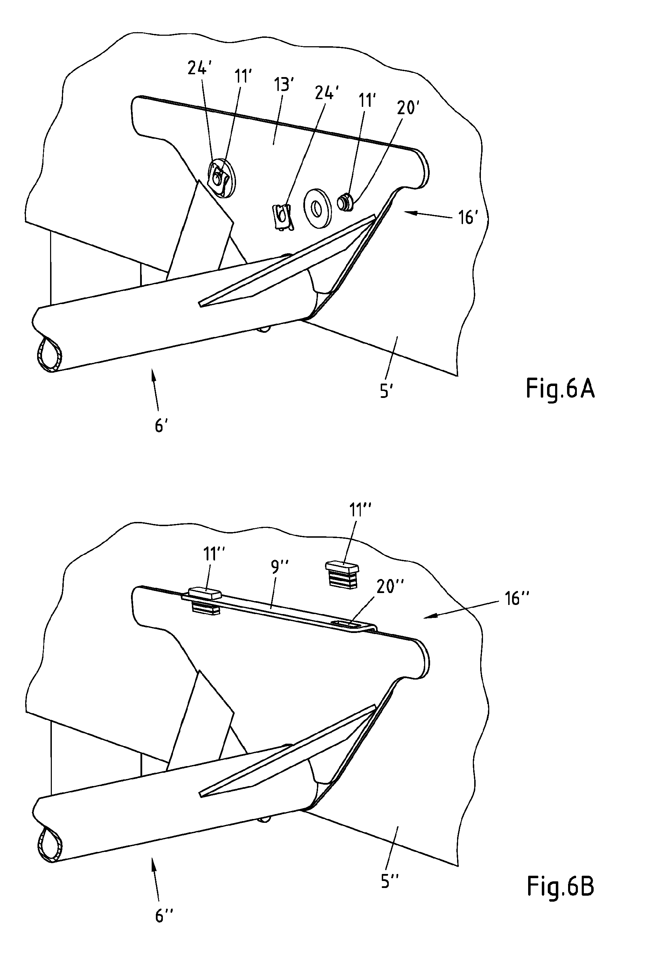

In den Fig. 6A-B sind zwei alternative Ausgestaltungen der zweiten Verbindung 16',16" zwischen dem Chassis 6',6" und dem Seitenteil 5',5" dargestellt. Gemäß Fig. 6A sind ebenfalls zwei Bolzenelemente 11' am Seitenteil 5' vorgesehen, die in der Arretierstellung des Seitenteils 5' relativ zum Chassis 6' durch Öffnungen 20' in der Anschlussplatte 13' des Chassis 6' greifen. Die Bolzenelemente 11' werden auf der dem Seitenteil 5' abgewandten Seite der Öffnungen 20' durch Sicherungsmittel 24', in Form von Schnellbefestigern oder Blechmuttern formschlüssig gegen nachträgliches Herausziehen gesichert. Gemäß Fig. 6B weist die Anschlussplatte 9" des Seitenteils

Öffnungen 20" auf, durch die ebenfalls Bolzenelemente 11" hindurchgesteckt werden. Die durchgesteckten Bolzenelemente 11" bilden dann einen Formschluss, der ein Zurückschwenken des Seitenteils 5" in die Ausgangsstellung blockiert. Dabei sind die Bolzenelemente 11" sowohl in Einschubrichtung als auch in Auszugsrichtung formschlüssig und/oder kraftschlüssig in den Öffnungen 20" gesichert.

## Patentansprüche

1. Sitzmöbel (1) und/oder Liegemöbel, mit wenigstens einem Chassis (6,6',6") und wenigstens einem über wenigstens zwei separate Verbindungen (15,16,16',16") ortsfest mit dem Chassis (6,6',6") verbundenen Seitenteil (5,5',5"),
**dadurch gekennzeichnet, dass** die erste Verbindung (15) zwischen dem Seitenteil (5,5',5") und dem Chassis (6,6',6") eine formschlüssige Schwenkverbindung ist, dass das Seitenteil (5,5',5") bei gefügter erster Verbindung (15) gegenüber dem Chassis (6,6',6") aus einer Ausgangsstellung in eine Arretierstellung zur Verbindung der zweiten Verbindung (16,16',16") schwenkbar ist und dass die zweite Verbindung (16,16',16") zwischen dem Chassis (6,6',6") und dem Seitenteil (5,5'5,") ein Zurückschwenken des Seitenteils (5,5',5") aus der Arretierstellung in die Ausgangsstellung blockiert.

2. Sitzmöbel und/oder Liegemöbel nach Anspruch 1,
**dadurch gekennzeichnet, dass** die erste Verbindung (15) als Steckverbindung, vorzugsweise mit einem Endanschlag (18) in Einsteckrichtung der ersten Verbindung (15), ausgebildet ist und dass im eingesteckten Zustand das Seitenteil (5,5',5") teilweise in das Chassis (6,6',6") und/oder das Chassis (6,6',6") teilweise das Seitenteils (5,5',5") eingreift.

3. Sitzmöbel und/oder Liegemöbel nach Anspruch 1 oder 2,
**dadurch gekennzeichnet, dass** die erste Verbindung (15), insbesondere in der Arretierstellung des Seitenteils (5,5',5"), in wenigstens einem Paar gegenläufiger Richtungen (V;L), vorzugweise in zwei senkrecht zueinander verlaufenden Paaren gegenläufiger Richtungen (V,L), einen Formschluss bildet.

4. Sitzmöbel und/oder Liegemöbel nach Anspruch 3,
**dadurch gekennzeichnet, dass** das wenigstens eine Paar gegenläufiger Richtungen (V;L) vertikal und/oder parallel zum Untergrund ausgerichtet ist.

5. Sitzmöbel und/oder Liegemöbel nach Anspruch 3 oder 4,
**dadurch gekennzeichnet, dass** die erste Verbindung (15) in der Arretierstellung in wenigstens einem Paar gegenläufiger Richtungen (V;L) einen im Wesentlichen spielfreien Formschluss bildet.

6. Sitzmöbel und/oder Liegemöbel nach einem der Ansprüche 1 bis 5,
**dadurch gekennzeichnet, dass** das Chassis (6,6',6") ein Hohlprofil (12), vorzugsweise in Form einer sich zwischen den Seitenteilen (5,5',5") erstreckenden Traverse, zum Einstecken des Seitenteils (5,5',5") zum Fügen der ersten Verbindung (15) aufweist.

7. Sitzmöbel und/oder Liegemöbel nach einem der Ansprüche 1 bis 6,
**dadurch gekennzeichnet, dass** das Seitenteil (5,5',5") einen, vorzugsweise über eine Anschlussplatte (9,9") am Seitenteil (5,5',5") gehaltenen, Vorsprung (10) zum Einstecken in das Hohlprofil (12) des Chassis (6,6',6") aufweist.

8. Sitzmöbel und/oder Liegemöbel nach einem der Ansprüche 2 bis 7,
**dadurch gekennzeichnet, dass** die erste Verbindung (15), vorzugsweise wenigstens in der Ausgangsstellung des Seitenteils (5,5',5") und/oder im eingesteckten Zustand der ersten Verbindung (15), drehbar zu einer parallel zur Querrichtung (Q) des Sitzmöbels (1) verlaufenden Achse ausgebildet ist.

9. Sitzmöbel und/oder Liegemöbel nach einem der Ansprüche 1 bis 8,
**dadurch gekennzeichnet, dass** eine, vorzugsweise in der Arretierstellung zu fügende, dritte Verbindung (17) zwischen dem Chassis (6,6',6") und dem Seitenteil (5,5',5") vorgesehen ist.

10. Sitzmöbel und/oder Liegemöbel nach Anspruch 9,
**dadurch gekennzeichnet, dass** die dritte Verbindung (17) in wenigstens einem Paar gegenläufigen Richtungen (Q;L), vorzugsweise zwei Paaren, insbesondere senkrecht zueinander verlaufenden, gegenläufiger Richtungen (Q,L), einen Formschluss bildet.

11. Sitzmöbel und/oder Liegemöbel nach einem der Ansprüche 7 bis 10,
**dadurch gekennzeichnet, dass** der Vorsprung (10) des Seitenteils (5,5',5") in Form eines hakenförmigen Fingers ausgebildet ist, dass sich der Vorsprung (10) abschnittsweise vom Seitenteil (5,5',5") in Richtung des Chassis (6,6',6") und an einem, vorzugsweise freien, Ende in Richtung des Untergrunds erstreckt und dass im gefügten Zustand der dritten Verbindung (17) das Ende des Vorsprungs (10) formschlüssig in eine Aufnahme (22), insbesondere Öffnung, des Chassis (6,6',6") eingreift.

12. Sitzmöbel und/oder Liegemöbel nach einem der Ansprüche 1 bis 11,
**dadurch gekennzeichnet, dass** das Seitenteil (5,5',5") in der Arretierstellung formschlüssig gegenüber einem Zurückverschwenken des Seitenteils (5,5',5") um die erste Verbindung (15) gesichert ist.

13. Sitzmöbel und/oder Liegemöbel nach einem der Ansprüche 1 bis 12,
**dadurch gekennzeichnet, dass** wenigstens ein Bolzenelement (11,11',11") zur Bildung der zweiten Verbindung (16,16',16") vorgesehen ist und dass das wenigstens eine Bolzenelement (11,11',11") formschlüssig durch eine Öffnung (20,20',20") des Chassis (6,6',6") und/oder des Seitenteils (5,5',5") greift.

14. Sitzmöbel und/oder Liegemöbel nach einem der Ansprüche 1 bis 13,
**dadurch gekennzeichnet, dass** die erste Verbindung (15), die zweite Verbindung (16,16',16") und/oder die dritte Verbindung (17) jeweils zwischen dem Chassis (6,6',6") und dem Seitenteil (5,5',5") wenigstens zwei senkrecht zueinander stehenden Paaren gegenläufiger Richtungen (Q,L,V) einen Formschluss bilden und/oder zusammen in drei senkrecht zueinander verlaufenden Paaren gegenläufiger Richtungen (Q,L,V) einen Formschluss bilden.
